# EUROPÄISCHE PATENTSCHRIFT

(11) **EP 2 937 285 B1**
(45) Veröffentlichungstag und Bekanntmachung des Hinweises auf die Patenterteilung: **10.05.2017**
(21) Anmeldenummer: 15160504.5
(22) Anmeldetag: 24.03.2015
(51) Int. Cl.: B64D 11/00

(54) **Schließvorrichtung für ein Gepäckablagefach eines Flugzeugs und Gepäckablagefach hiermit**
Closing device for a luggage compartment of an aircraft and luggage compartment with same
Dispositif de fermeture pour un compartiment de rangement de bagage d'un avion et compartiment de rangement de bagage en étant équipé

(30) Priorität: 15.04.2014 DE 202014101793 U
(43) Veröffentlichungstag der Anmeldung: 28.10.2015
(73) Patentinhaber: RO-RA Aviation Systems GmbH, 4862 Schörfling a. Attersee (AT)
(72) Erfinder: Haller, Matthias, 4862 Schörfling (AT)
(74) Vertreter: Lösch, Christoph Ludwig Klaus

(56) Entgegenhaltungen:
- WO-A1-2011/070072
- US-A1- 2011 253 837
- US-A1- 2013 206 903

## Beschreibung

Die Erfindung betrifft eine Schließvorrichtung für ein Gepäckablagefach eines Flugzeugs und Gepäckablagefach sowie ein Gepäckablagefach. Gepäckablagefächer dienen im Flugzeug dazu, das Gepäck von Flugreisenden sicher zu verstauen. Derartige Gepäckablagefächer sind typischerweise in der Passagierkabine oberhalb der Sitzreihen angeordnet und werden daher auch als sog. Hatracks bezeichnet. Nach dem Beladen des Gepäckfaches kann das Gepäckfach dadurch geschlossen werden, dass ein relativ zum Gehäuse des Gepäckfaches schwenkbarer Gepäckbehälter nach oben geklappt wird.
Dokument WO 2011/070072 offenbart eine Schließvorrichtung für ein Gepäckablagefach eines Flugzeugs, welches ein stationäres Gehäuse und einen um eine Drehachse relativ zum Gehäuse schwenkbaren Gepäckbehälter aufweist. Der Erfindung liegt die Aufgabe zugrunde, eine Schließvorrichtung bzw. ein Gepäckfach mit einer Schließvorrichtung anzubieten, die ein komfortables Verschließen des Gepäckablagefachs zulässt und zugleich besonders platzsparend ausgebildet ist.
Diese Aufgabe wird für die Schließvorrichtung durch die Merkmale des Schutzanspruchs 1 und für das Gepäckfach durch die Merkmale des Schutzanspruchs 10 gelöst. Vorteilhafte Ausführungsformen sind in den Unteransprüchen beschrieben.
Erfindungsgemäß besitzt die Schließvorrichtung für ein Gepäckablagefach eines Flugzeugs, welches ein stationäres Gehäuse und einen um eine Drehachse relativ zum Gehäuse schwenkbaren Gepäckbehälter aufweist, eine Griffeinheit, eine erste Schließeinheit und ein zweite Schließeinheit. Die Griffeinheit ist an der Außenseite des Gepäckbehälters anbringbar und weist einen um eine Griffbasis schwenkbaren Betätigungsgriff auf. Die erste Schließeinheit verbindet im verschlossenen Zustand eine erste Seitenwand des Gepäckbehälters mit dem Gehäuse. Die zweite Schließeinheit verbindet im verschlossenen Zustand eine zweite, der ersten Seitenwand gegenüberliegende Seitenwand des Gepäckbehälters mit dem Gehäuse. Jede der beiden Schließeinheiten weist auf: eine Schließbolzeneinheit, welche drehfest an das Gehäuse anbringbar ist und zwei parallel zueinander angeordnete Schließbolzen besitzt; eine Schließhakeneinheit mit zwei relativ zur jeweiligen Seitenwand drehbar lagerbaren Schließhaken, welche im verschlossenen Zustand die Schließbolzen umschließen; eine Gelenkeinheit zur Übertragung der Schwenkbewegung des Betätigungsgriffs um die Griffbasis zu den Schließbolzen, welche eine Übertragungswelle und ein sich parallel zur jeweiligen Seitenwand erstreckendes Gestänge besitzt.

Durch das Vorhandensein zweier Schließeinheiten ist ein symmetrisches Verschließen beider Seitenwände des Gepäckfaches möglich. Die Übertragungswelle und die Gestänge bilden eine platzsparende Möglichkeit der Übertragung der Schwenkbewegung des Betätigungsgriffs zu den Schließhaken dar. Durch die parallele Ausrichtung der Gestänge zu der jeweiligen Seitenwand kann das Gestänge besonders platzsparend und unauffällig integriert werden. Insbesondere sind keine abstehende und/oder sich im Inneren des Gepäckbehälters befindlichen Teile vorhanden.

In einer vorteilhaften Ausführungsform weist die Griffeinheit eine an der Griffbasis drehgelagerte Wellenaufnahme zur Aufnahme eines axialen Endes der Übertragungswelle und ein Griffgelenk zur Übertragung der Schwenkbewegung des Betätigungsgriffs zu der Wellenaufnahme auf. Auf diese Weise kann die Schwenkbewegung des Betätigungsgriffs auf besonders vorteilhafte Weise an die Übertragungswelle weitergegeben werden.

In einer weiteren vorteilhaften Ausführungsform ist an dem der Griffeinheit zugewandten Ende der Übertragungswelle ein Verbindungsprofil ausgebildet, welches formschlüssig mit der an der Griffeinheit ausgebildeten Wellenaufnahme verbunden ist. Dies führt dazu, dass die Übertragungswelle besonders zuverlässig mit der Griffeinheit verbunden ist und die aufgrund der Schwenkbewegung des Betätigungsgriffs auftretenden Drehmomente besonders zuverlässig übertragen werden.

In bevorzugter Weise ist an dem dem Gestänge zugewandten Ende der Übertragungswelle ebenfalls ein (weiteres) Verbindungsprofil ausgebildet, welches formschlüssig mit einer am Gestänge ausgebildeten Wellenaufnahme verbunden ist. Dadurch können auch dieses Ende der Übertragungswelle zuverlässig verbunden und die auftretenden Drehmomente entsprechend zuverlässig übertragen werden.

In einer vorteilhaften Ausführungsform weist das Gestänge einen drehfest mit der Übertragungswelle verbunden Eingangshebel sowie zwei Ausgangshebel auf, wobei die Ausgangshebel mit einem ersten Ende über einen Kuppelbolzen miteinander verbunden sind und mit ihren jeweils zweiten Enden mit jeweils einem Schließhaken verbunden sind. Auf diese Weise ist eine synchrone Öffnung bzw. Schließung beider Schließhaken möglich. Zur Übertragung der Schwenkbewegung des Betätigungsgriffs über weitere Entfernungen können zwischen dem Kuppelbolzen und dem Eingangshebel ein oder mehrere Zwischenhebel angeordnet sein.

Ist das Gestänge von einem Gestängegehäuse (insbesondere von einem eine Ober- und eine Unterschale aufweisenden Gehäuse) umgeben, so ist ein besonders wirkungsvoller Schutz des Gestänges vor äußerer Beeinflussung (Beschädigung, Verschmutzung) gegeben.

Als besonders vorteilhaft hat sich herausgestellt, die beiden Schließhaken einer jeden Schließhakeneinheit spiegelbildlich zueinander anzuordnen.

In bevorzugter Weise besitzt die Schließbolzeneinheit eine Schließbolzenbasisplatte, in welcher die Schließbolzen gelagert sind und welche über Schrauben mit dem Gehäuse des Gepäckablagefachs verbindbar ist.

Das erfindungsgemäße Gepäckablagefach eines Flugzeugs weist auf: ein stationäres Gehäuse; einen um eine Drehachse relativ zum Gehäuse schwenkbaren Gepäckbehälter; eine an der Außenseite des Gepäckbehälters angebrachte Griffeinheit, welche einen um eine Griffbasis schwenkbaren Betätigungsgriff aufweist; eine erste Schließeinheit, welche im verschlossenen Zustand eine erste Seitenwand des Gepäckbehälters mit dem Gehäuse verbindet; und eine zweite Schließeinheit, welche im verschlossenen Zustand eine zweite, der ersten Seitenwand gegenüberliegende Seitenwand des Gepäckbehälters mit dem Gehäuse verbindet. Die beiden Schließeinheiten weisen jeweils auf: eine Schließbolzeneinheit, welche drehfest an das Gehäuse angebracht ist und zwei parallel zueinander angeordnete Schließbolzen besitzt; eine Schließhakeneinheit mit zwei relativ zur jeweiligen Seitenwand drehbar an gelagerten Schließhaken, welche im verschlossenen Zustand die Schließbolzen umschließen; eine Gelenkeinheit zur Übertragung der Schwenkbewegung des Betätigungsgriffs um die Griffbasis zu den Schließbolzen, welche eine Übertragungswelle und ein sich parallel zur jeweiligen Seitenwand erstreckendes Gestänge besitzt.

Die Erfindung ist anhand eines Ausführungsbeispiels in den Zeichnungsfiguren weiter erläutert. Es zeigen:
- Fig. 1: eine perspektivische Ansicht einer Schließvorrichtung;
- Fig. 2: eine Seitenansicht eines Gepäckablagefachs im verschlossenen Zustand;
- Fig. 3: eine Seitenansicht des Gepäckablagefachs aus Fig. 2 im geöffneten Zustand;
- Fig. 4: eine perspektivische Ansicht einer Griffeinheit;
- Fig. 5: eine Explosionsdarstellung der Griffeinheit aus Fig. 4;
- Fig. 6: eine Explosionsdarstellung einer Schließeinheit;
- Fig. 7: eine Seitenansicht der Schließeinheit aus Fig. 6 im verschlossenen Zustand;
- Fig. 8: eine Seitenansicht der Schließeinheit aus Fig. 7 im geöffneten Zustand; und
- Fig. 9: eine Explosionsdarstellung der in Fig. 6 dargestellten Schließbolzeneinheit.

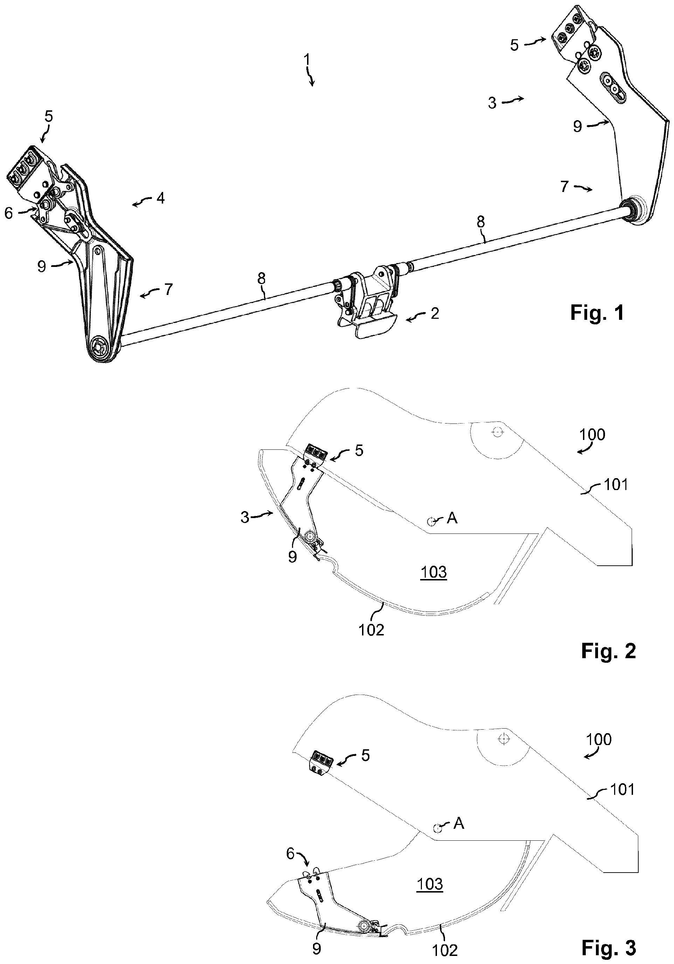

Fig. 1 zeigt eine Schließvorrichtung 1. Die Schließvorrichtung 1 besteht aus einer Griffeinheit 2, einer ersten Schließeinheit 3 und einer zweiten Schließeinheit 4. Die beiden Schließeinheiten 3, 4 sind spiegelbildlich zueinander aufgebaut, besitzen jedoch gleichwirkende Komponenten, sodass im Folgenden vorrangig die erste Schließeinheit 3 näher beschrieben wird. Die getätigten Aussagen sind jedoch in analoger Weise auch für die zweite Schließeinheit 4 gültig.

Jede der Schließeinrichtungen 3, 4 ist unterteilt in eine Schließbolzeneinheit 5, eine Schließhakeneinheit 6 und eine Gelenkeinheit 7. Die Gelenkeinheit 7 wiederum weist eine Übertragungswelle 8 und ein Gestänge 9 auf.

Fig. 2 und Fig. 3 zeigen ein Gepäckablagefach 100 für ein Flugzeug mit einem stationären Gehäuse 101, einem um eine Drehachse A relativ zum Gehäuse 101 schwenkbaren Gepäckbehälter 102 und der Schließvorrichtung 1. In dem in Fig. 2 dargestellten verschlossenen Zustand verbindet die erste Schließeinheit 3 eine erste Seitenwand 103 des Gepäckbehälters 102 mit dem Gehäuse 101. Das Gepäckablagefach 100 ist geschlossen. In dem in Fig. 3 dargestellten geöffneten Zustand wurde die erste Schließeinheit 3 gelöst und der Gepäckbehälter 102 ist aufgeklappt.

Das Lösen der ersten Schließeinheit 3 erfolgt gleichzeitig zum Lösen der zweiten Schließeinheit 4. In jeder Schließeinheit 3, 4 wird die jeweilige Schließhakeneinheit 6 aus der jeweiligen Schließbolzeneinheit 5 ausgeklinkt und auf diese Weise ein Verschwenken des Gepäckbehälters 102 relativ zum Gehäuse 101 ermöglicht.

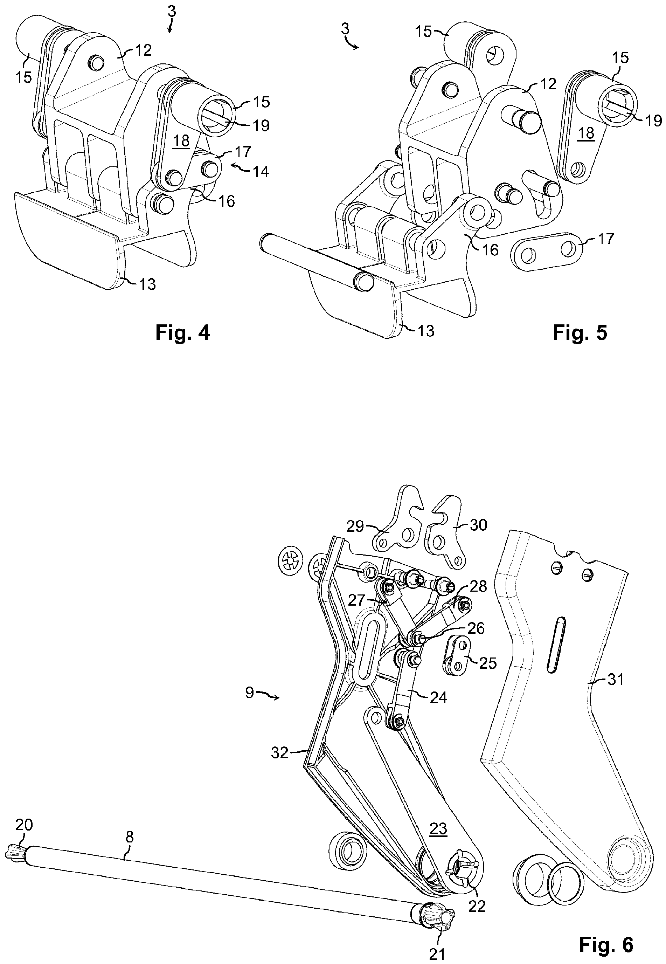

Fig. 4 und Fig. 5 zeigen den detaillierten Aufbau der Griffeinheit 3, wobei Fig. 4 ein perspektivische Ansicht und Fig. 5 eine Explosionsdarstellung ist. Die Griffeinheit 3 weist eine Griffbasis 12, einen Betätigungsgriff 13, zwei spiegelsymmetrisch zueinander ausgebildete Griffgelenke 14 und zwei spiegelsymmetrisch zueinander ausgebildet Wellenaufnahmen 15 auf. Die Griffbasis 12 ist drehfest an der Außenseite des Gepäckbehälters 102 befestigt und bildet die Montagebasis für den Betätigungsgriff 13, die Griffgelenke 14 und die Wellenaufnahmen 15.

Der Betätigungsgriff 13 ist schwenkbar zur Griffbasis 12 gelagert. Die Griffgelenke 14 weisen jeweils einen einstückig mit dem Betätigungsgriff 13 ausgebildeten ersten Hebel 16, einen drehgelenkig mit dem ersten Hebel 16 verbunden zweiten Hebel 17 und einen drehgelenkig mit dem zweiten Hebel 17 verbunden dritten Hebel 18 auf, der einstückig mit der jeweiligen Wellenaufnahme 15 verbunden ist. Auf diese Weise werden, wenn der Betätigungshebel 13 relativ zur Griffbasis 12 geschwenkt wird, die drehbar in der Griffbasis 12 gelagerten Wellenaufnahmen 15 mit Hilfe der Griffgelenke 14 um einen entsprechenden Drehwinkel gedreht.

Die Wellenaufnahmen 15 besitzen in ihrer innenliegenden Mantelfläche Nuten 19, sodass jeweils ein korrespondierendes Verbindungsprofil 20 der in Fig. 6 dargestellten Übertragungswelle 8 formschlüssig mit der jeweiligen Wellenaufnahme 15 verbunden ist. Die Übertragungswelle 8 ist als hohlzylindrischer Rohrkörper ausbildet und weist an dem der Griffeinheit 3 zugewandten Ende das Verbindungsprofil 20 sowie an dem dem Gestänge 9 zugewandten Ende ein weiteres Verbindungsprofil 21 auf.

Das Verbindungsprofil 21 ist formschlüssig in eine am Gestänge 9 ausgebildete Wellenaufnahme 22 verbunden. Die Wellenaufnahme 22 ist hierbei einstückig mit einem Eingangshebel 23 des Gestänges 9 ausgebildet. Das der Wellenaufnahme 22 gegenüber liegende Ende des Eingangshebels 24 ist drehgelenkig mit einem erstem Zwischenhebel 24 verbunden. Der erste Zwischenhebel 24 wiederum ist drehgelenkig mit einem zweiten Zwischenhebel 25 verbunden. Der zweite Zwischenhebel 25 ist über einen Kupplungsbolzen 26 mit einem ersten Ausgangshebel 27 und einem zweiten Ausgangshebel 28 verbunden. Die der dem Kupplungsbolzen 26 gegenüber liegenden Enden der Ausgangshebel 27, 28 sind drehgelenkig jeweils mit einem Schließhaken 29 bzw. 30 verbunden.

Die Schließhaken 29, 30 sind spiegelbildlich zueinander angeordnet und jeweils drehbar relativ zur Seitenwand 103 des Gepäckbehälters 102 gelagert. Die Schließhaken 29, 30 bilden die Schließhakeneinheit 10.

Das Gestänge 9 ist von einem aus einer Oberschale 31 und einer Unterschale 32 gebildeten Gestängegehäuse umgeben. Die Unterschale 32 ist mit der äußeren Seitenwand 103 des Gepäckbehälters 102 verschraubt. Das Gestänge 9 erstreckt sich somit parallel zur Seitenwand 103.

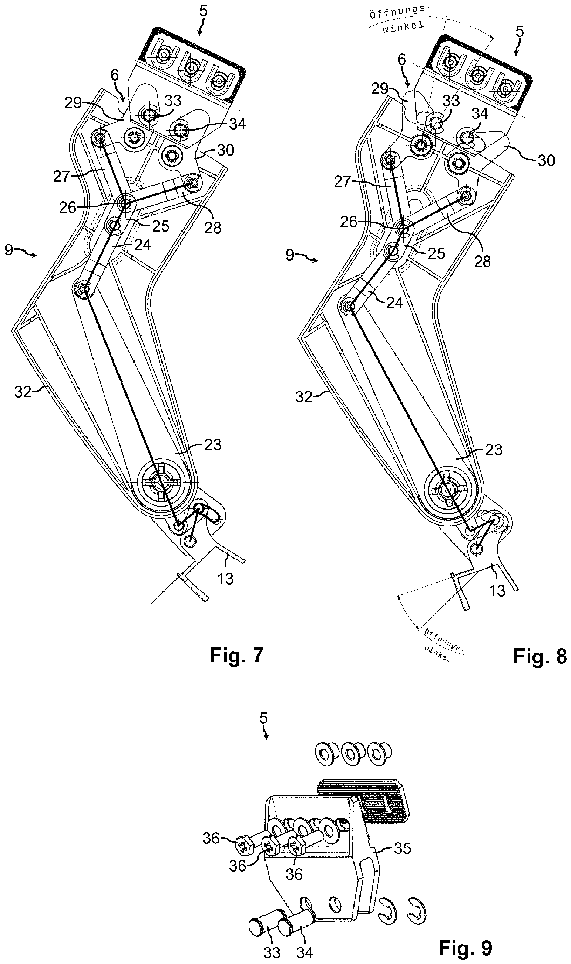

Fig. 7 zeigt die Schließeinheit 3 im verschlossenen Zustand. Die Schließhaken 29, 30 der Schließhakeneinheit 10 umschließen jeweils einen Schließbolzen 33 bzw. 34 der Schließbolzeneinheit 11.

Fig. 8 zeigt die Schließeinheit 3 im geöffneten Zustand. Die Schließhaken 29, 30 der Schließhakeneinheit 10 sind durch aus den Schließbolzen 33 bzw. 34 ausgeklinkt.

Fig. 9 zeigt in Form einer Explosionsdarstellung den detaillierten Aufbau der Schließbolzeneinheit 11. Die Schließbolzen 33, 34 sind parallel zueinander angeordnet und in einer Schließbolzenbasisplatte 35 gelagert. Die Schließbolzenplatte 35 ist über Schrauben 36 drehfest mit dem Gehäuse 101 verbunden.

Im verschlossenen Zustand des Gepäckablagefachs 100 umschließen die Schließhaken 29, 30 die Schließbolzen 33, 34. Zum Öffnen des Gepäckablagefachs 100 wird der Betätigungsgriff 13 um einen in Fig. 8 eingezeichneten Öffnungswinkel relativ zur Griffbasis 12 geschwenkt. Diese Schwenkbewegung wird über das jeweilige Griffgelenk 14 und die Wellenaufnahme 15 auf die jeweilige Übertragungswelle 8 übertragen. Die Übertragungswelle 8 wiederum verschwenkt den Eingangshebel 23 des Gestänges 9, was zu einer Weiterübertragung der Schwenkbewegung bis hin zu den Schließhaken 29, 30 führt. Die Schließhaken 29, 30 werden auf diese Weise ebenfalls um den Öffnungswinkel verschwenkt und aus den Schließbolzen 33, 34 ausgeklingt. Dadurch ist die Verbindung zwischen Schließhaken 29, 30 und Schließbolzen 33, 34 aufgehoben und der Gepäckbehälter 102 kann relativ zum Gehäuse 101 verschwenkt und somit das Gepäckablagefach 100 geöffnet werden.

### BEZUGSZEICHENLISTE

- 1: Schließvorrichtung
- 2: Griffeinheit
- 3,4: Schließeinheit
- 5: Schließbolzeneinheit
- 6: Schließhakeneinheit
- 7: Gelenkeinheit
- 8: Übertragungswelle
- 9: Gestänge
- 12: Griffbasis
- 13: Betätigungsgriff
- 14: Griffgelenk
- 15: Wellenaufnahme
- 16, 17, 18: Hebel
- 19: Nut
- 20,21: Verbindungsprofil
- 22: Wellenaufnahme
- 23: Eingangshebel
- 24,25: Zwischenhebel
- 26: Kupplungsbolzen
- 27,28: Ausgangshebel
- 29,30: Schließhaken
- 31: Oberschale
- 32: Unterschale
- 33,34: Schließbolzen
- 35: Schließbolzenbasisplatte
- 36: Schraube
- 100: Gepäckablagefach
- 101: Gehäuse
- 102: Gepäckbehälter
- 103: Seitenwand
- A: Drehachse

## Patentansprüche

1. Schließvorrichtung (1) für ein Gepäckablagefach (100) eines Flugzeugs, welches ein stationäres Gehäuse (101) und einen um eine Drehachse (A) relativ zum Gehäuse (101) schwenkbaren Gepäckbehälter (102) aufweist, mit:
- einer an der Außenseite des Gepäckbehälters (102) anbringbaren Griffeinheit (2), welche einen um eine Griffbasis (12) schwenkbaren Betätigungsgriff (13) aufweist;
- einer ersten Schließeinheit (3), welche im verschlossenen Zustand eine erste Seitenwand (103) des Gepäckbehälters (102) mit dem Gehäuse (101) verbindet; und
- eine zweite Schließeinheit (4), welche im verschlossenen Zustand eine zweite, der ersten Seitenwand (103) gegenüberliegende Seitenwand des Gepäckbehälters (102) mit dem Gehäuse (101) verbindet;
wobei beide Schließeinheiten (3, 4) jeweils aufweisen:
- eine Schließbolzeneinheit (5), welche drehfest an das Gehäuse (101) anbringbar ist und zwei parallel zueinander angeordnete Schließbolzen (33, 34) besitzt;
- eine Schließhakeneinheit (6) mit zwei relativ zur jeweiligen Seitenwand drehbar lagerbaren Schließhaken (29, 30), welche im verschlossenen Zustand die Schließbolzen (33, 34) umschließen;
- eine Gelenkeinheit (7) zur Übertragung der Schwenkbewegung des Betätigungsgriffs (13) um die Griffbasis (12) zu den Schließbolzen (33, 34), welche eine Übertragungswelle (8) und ein sich parallel zur jeweiligen Seitenwand erstreckendes Gestänge (9) besitzt.

2. Schließvorrichtung nach Anspruch 1, wobei die Griffeinheit (2) eine an der Griffbasis (12) drehgelagerte Wellenaufnahme (15) zur Aufnahme eines axialen Endes der Übertragungswelle (8) und ein Griffgelenk (14) zur Übertragung der Schwenkbewegung des Betätigungsgriffs (13) zu der Wellenaufnahme (15) aufweist.

3. Schließvorrichtung nach Anspruch 2, wobei an dem der Griffeinheit (2) zugewandten Ende der Übertragungswelle (8) ein Verbindungsprofil (20) ausgebildet ist, welches formschlüssig mit der an der Griffeinheit (2) ausgebildeten Wellenaufnahme (15) verbunden ist.

4. Schließvorrichtung nach einem der vorhergehenden Ansprüche, wobei an dem dem Gestänge (9) zugewandten Ende der Übertragungswelle (8) ein Verbindungsprofil (21) ausgebildet ist, welches formschlüssig mit einer am Gestänge (9) ausgebildeten Wellenaufnahme (22) verbunden ist.

5. Schließvorrichtung nach einem der vorhergehenden Ansprüche, wobei das Gestänge (9) einen drehfest mit der Übertragungswelle (8) verbunden Eingangshebel (23) sowie zwei Ausgangshebel (27, 28) aufweist, wobei die Ausgangshebel (27, 28) mit einem ersten Ende über einen Kuppelbolzen (26) miteinander verbunden sind und mit ihren jeweils zweiten Enden mit jeweils einem Schließhaken (29, 30) verbunden sind.

6. Schließvorrichtung nach Anspruch 5, wobei zwischen dem Kuppelbolzen (26) und dem Eingangshebel (23) mindestens ein Zwischenhebel (24, 25) angeordnet ist.

7. Schließvorrichtung nach einem der vorhergehenden Ansprüche, wobei das Gestänge (9) von einem Gestängegehäuse umgeben ist.

8. Schließvorrichtung nach einem der vorhergehenden Ansprüche, wobei die beiden Schließhaken (29, 30) der jeweiligen Schließhakeneinheit (6) spiegelbildlich zueinander angeordnet sind.

9. Schließvorrichtung nach einem der vorhergehenden Ansprüche, wobei die Schließbolzeneinheit (5) eine Schließbolzenbasisplatte (35) aufweist, in welcher die Schließbolzen (33, 34) gelagert sind und welche über Schrauben (36) mit dem Gehäuse (101) des Gepäckablagefachs (100) verbindbar ist.

10. Gepäckablagefach (100) eines Flugzeugs, mit:
- einem stationären Gehäuse (101);
- einem um eine Drehachse (A) relativ zum Gehäuse (101) schwenkbaren Gepäckbehälter (102);
- einer an der Außenseite des Gepäckbehälters (102) angebrachten Griffeinheit (3), welche einen um eine Griffbasis (12) schwenkbaren Betätigungsgriff (13) aufweist;
- einer ersten Schließeinheit (3), welche im verschlossenen Zustand eine erste Seitenwand (103) des Gepäckbehälters (102) mit dem Gehäuse (101) verbindet; und
- einer zweiten Schließeinheit (4), welche im verschlossenen Zustand eine zweite, der ersten Seitenwand gegenüberliegende Seitenwand des Gepäckbehälters (102) mit dem Gehäuse (101) verbindet;
wobei beide Schließeinheiten (3, 4) jeweils aufweisen:
- eine Schließbolzeneinheit (5), welche drehfest an das Gehäuse (101) angebracht ist und zwei parallel zueinander angeordnete Schließbolzen (33, 34) besitzt;
- eine Schließhakeneinheit (6) mit zwei relativ zur jeweiligen Seitenwand drehbar an gelagerten Schließhaken (29, 30), welche im verschlossenen Zustand die Schließbolzen (33, 34) umschließen;
- eine Gelenkeinheit (7) zur Übertragung der Schwenkbewegung des Betätigungsgriffs (13) um die Griffbasis (12) zu den Schließbolzen (33, 34), welche eine Übertragungswelle (8) und ein sich parallel zur jeweiligen Seitenwand erstreckendes Gestänge (9) besitzt.

## Claims

1. Closing device (1) for a luggage compartment (100) of an aircraft, which luggage compartment has a stationary housing (101) and a luggage container (102) which is pivotable about an axis of rotation (A) relative to the housing (101), with:
- a handle unit (2) which is attachable to the outer side of the luggage container (102) and has an actuating handle (13) which is pivotable about a handle base (12);
- a first closing unit (3) which, in the closed state, connects a first side wall (103) of the luggage container (102) to the housing (101); and
- a second closing unit (4) which, in the closed state, connects a second side wall, which is opposite the first side wall (103), of the luggage container (102) to the housing (101);
wherein the two closing units (3, 4) each have:
- a closing bolt unit (5) which is attachable to the housing (101) for rotation therewith and has two closing bolts (33, 34) arranged parallel to each other;
- a closing hook unit (6) with two closing hooks (29, 30) which can be mounted rotatably relative to the respective side wall and, in the closed state, surround the closing bolts (33, 34);
- a joint unit (7) for transmitting the pivoting movement of the actuating handle (13) about the handle base (12) to the closing bolts (33, 34), which joint unit has a transmission shaft (8) and a linkage (9) extending parallel to the respective side wall.

2. Closing device according to Claim 1, wherein the handle unit (2) has a shaft receptacle (15), which is mounted rotationally on the handle base (12), for receiving an axial end of the transmission shaft (8) and a handle joint (14) for transmitting the pivoting movement of the actuating handle (13) to the shaft receptacle (15).

3. Closing device according to Claim 2, wherein a connecting profile (20) which is connected in a form-fitting manner to the shaft receptacle (15) formed on the handle unit (2) is formed at that end of the transmission shaft (8) which faces the handle unit (2).

4. Closing device according to one of the preceding claims, wherein a connecting profile (21) which is connected in a form-fitting manner to a shaft receptacle (22) formed on the linkage (9) is formed at that end of the transmission shaft (8) which faces the linkage (9).

5. Closing device according to one of the preceding claims, wherein the linkage (9) has an input lever (23), which is connected to the transmission shaft (8) for rotation therewith, and two output levers (27, 28), wherein the output levers (27, 28) are connected to each other at a first end via a coupling bolt (26) and are connected at their second ends in each case by a respective closing hook (29, 30).

6. Closing device according to Claim 5, wherein at least one intermediate lever (24, 25) is arranged between the coupling bolt (26) and the input lever (23).

7. Closing device according to one of the preceding claims, wherein the linkage (9) is surrounded by a linkage housing.

8. Closing device according to one of the preceding claims, wherein the two closing hooks (29, 30) of the respective closing hook unit (6) are arranged in a mirror-inverted manner with respect to each other.

9. Closing device according to one of the preceding claims, wherein the closing bolt unit (5) has a closing bolt base plate (35) in which the closing bolts (33, 34) are mounted and which is connectable to the housing (101) of the luggage compartment (100) via screws (36).

10. Luggage compartment (100) of an aircraft, with:
- a stationary housing (101);
- a luggage container (102) which is pivotable about an axis of rotation (A) relative to the housing (101) ;
- a handle unit (3) which is attached to the outer side of the luggage container (102) and has an actuating handle (13) which is pivotable about a handle base (12);
- a first closing unit (3) which, in the closed state, connects a first side wall (103) of the luggage container (102) to the housing (101); and
- a second closing unit (4) which, in the closed state, connects a second side wall, which is opposite the first side wall, of the luggage container (102) to the housing (101);
wherein the two closing units (3, 4) each have:
- a closing bolt unit (5) which is attached to the housing (101) for rotation therewith and has two closing bolts (33, 34) arranged parallel to each other;
- a closing hook unit (6) with two closing hooks (29, 30) which are mounted rotatably relative to the respective side wall and, in the closed state, surround the closing bolts (33, 34);
- a joint unit (7) for transmitting the pivoting movement of the actuating handle (13) about the handle base (12) to the closing bolts (33, 34), which joint unit has a transmission shaft (8) and a linkage (9) extending parallel to the respective side wall.

## Revendications

1. Dispositif de fermeture (1) pour un compartiment de rangement de bagages (100) d'un avion, qui présente un boîtier stationnaire (101) et un conteneur pour bagages (102) pouvant pivoter par rapport au boîtier (101) autour d'un axe de rotation (A), comprenant :
- une unité de poignée (2) pouvant être appliquée contre le côté extérieur du contenant pour bagages (102), qui présente une poignée d'actionnement (13) pouvant pivoter autour d'une base de poignée (12) ;
- une première unité de fermeture (3) qui, dans l'état fermé, relie une première paroi latérale (103) du conteneur pour bagages (102) au boîtier (101) ; et
- une deuxième unité de fermeture (4) qui, dans l'état fermé, relie une deuxième paroi latérale du conteneur pour bagages (102) opposée à la première paroi latérale (103) au boîtier (101) ;
les deux unités de fermeture (3, 4) présentant chacune :
- une unité de boulons de fermeture (5) qui peut être montée de manière solidaire en rotation sur le boîtier (101) et qui possède deux boulons de fermeture (33, 34) disposés parallèlement l'un à l'autre ;
- une unité de crochets de fermeture (6) avec deux crochets de fermeture (29, 30) pouvant être supportés de manière rotative par rapport à la paroi latérale respective, qui, dans l'état fermé, entourent les boulons de fermeture (33, 34) ;
- une unité d'articulation (7) pour transférer le mouvement de pivotement de la poignée d'actionnement (13) autour de la base de poignée (12) aux boulons de fermeture (33, 34), laquelle possède un arbre de transmission (8) et une tringlerie (9) s'étendant parallèlement à la paroi latérale respective.

2. Dispositif de fermeture selon la revendication 1, dans lequel l'unité de poignée (2) présente un logement d'arbre (15) supporté à rotation au niveau de la base de poignée (12) pour recevoir une extrémité axiale de l'arbre de transmission (8) et une articulation de poignée (14) pour transmettre le mouvement de pivotement de la poignée d'actionnement (13) au logement d'arbre (15).

3. Dispositif de fermeture selon la revendication 2, dans lequel un profil de connexion (20) est réalisé au niveau de l'extrémité de l'arbre de transmission (8) tournée vers l'unité de poignée (2), lequel est connecté par engagement par correspondance de formes au logement d'arbre (15) réalisé au niveau de l'unité de poignée (2).

4. Dispositif de fermeture selon l'une quelconque des revendications précédentes, dans lequel un profil de connexion (21) est réalisé au niveau de l'extrémité de l'arbre de transmission (8) tournée vers la tringlerie (9), lequel est connecté par engagement par correspondance de formes à un logement d'arbre (22) réalisé sur la tringlerie (9).

5. Dispositif de fermeture selon l'une quelconque des revendications précédentes, dans lequel la tringlerie (9) présente un levier d'entrée (23) connecté de manière solidaire en rotation à l'arbre de transmission (8) ainsi que deux leviers de sortie (27, 28), les leviers de sortie (27, 28) étant connectés l'un à l'autre par une première extrémité par le biais d'un boulon d'accouplement (26) et étant connectés par leurs deuxièmes extrémités respectives à chaque fois à un crochet de fermeture (29, 30).

6. Dispositif de fermeture selon la revendication 5, dans lequel au moins un levier intermédiaire (24, 25) est disposé entre le boulon d'accouplement (26) et le levier d'entrée (23).

7. Dispositif de fermeture selon l'une quelconque des revendications précédentes, dans lequel la tringlerie (9) est entourée par un boîtier de tringlerie.

8. Dispositif de fermeture selon l'une quelconque des revendications précédentes, dans lequel les deux crochets de fermeture (29, 30) de l'unité de crochet de fermeture respective (6) sont réalisés avec une symétrie spéculaire l'un par rapport à l'autre.

9. Dispositif de fermeture selon l'une quelconque des revendications précédentes, dans lequel l'unité de boulons de fermeture (5) présente une plaque de base de boulons de fermeture (35) dans laquelle sont supportés les boulons de fermeture (33, 34) et qui peut être connectée par le biais de vis (36) au boîtier (101) du compartiment de rangement de bagages (100).

10. Compartiment de rangement de bagages (100) d'un avion, comprenant :
- un boîtier stationnaire (101) ;
- un conteneur pour bagages (102) pouvant pivoter par rapport au boîtier (101) autour d'un axe de rotation (A) ;
- une unité de poignée (3) montée au niveau du côté extérieur du conteneur pour bagages (102), laquelle présente une poignée d'actionnement (13) pouvant pivoter autour d'une base de poignée (12) ;
- une première unité de fermeture (3) qui, dans l'état fermé, relie une première paroi latérale (103) du conteneur pour bagages (102) au boîtier (101) ; et
- une deuxième unité de fermeture (4) qui, dans l'état fermé, relie une deuxième paroi latérale du conteneur pour bagages (102) opposée à la première paroi latérale au boîtier (101) ;
les deux unités de fermeture (3, 4) présentant chacune :
- une unité de boulons de fermeture (5) qui peut être montée de manière solidaire en rotation sur le boîtier (101) et qui possède deux boulons de fermeture (33, 34) disposés parallèlement l'un à l'autre ;
- une unité de crochets de fermeture (6) avec deux crochets de fermeture (29, 30) supportés de manière rotative par rapport à la paroi latérale respective, qui, dans l'état fermé, entourent les boulons de fermeture (33, 34) ;
- une unité d'articulation (7) pour transférer le mouvement de pivotement de la poignée d'actionnement (13) autour de la base de poignée (12) aux boulons de fermeture (33, 34), laquelle possède un arbre de transmission (8) et une tringlerie (9) s'étendant parallèlement à la paroi latérale respective.
